# EUROPEAN PATENT APPLICATION

(11) **EP 4 467 386 A1**
(43) Date of publication of application: **27.11.2024**
(21) Application number: 22920460.7
(22) Date of filing: 22.11.2022
(51) Int. Cl.: B60L 15/40, B60L 3/00, B61L 27/16

(54) **TRAIN CONTROL SYSTEM, ON-BOARD CONTROL DEVICE, AND TRAIN CONTROL METHOD**

(30) Priority: 17.01.2022 JP 2022005345
(71) Applicant: Hitachi, Ltd., Tokyo 100-8280 (JP)
(72) Inventor: HAYASHI, Masaki, Tokyo 100-8280 (JP); HATTORI, Taishi, Tokyo 100-8280 (JP)
(74) Representative: MERH-IP Matias Erny Reichl Hoffmann Patentanwälte PartG mbB
(86) International application number: PCT/JP2022/043199
(87) International publication number: WO 2023/135940

(57) **Abstract**

An on-board control device of a train control system includes an on-board control unit that transmits an on-track position of a train to a ground control device, receives a travelable route and a traveling permission position of the train based on the on-track position from the ground control device, and controls the train based on an operation pattern for the traveling permission position. The ground control device includes a ground control unit that receives the on-track position from the on-board control device, calculates a travelable route and a traveling permission position based on the on-track position, and transmits the traveling permission position to the on-board control device. The on-board control unit monitors a state of a power unit mounted on the train, calculates a failure rate of a power unit, and controls the train based on an operation pattern selected based on the failure rate or based on the failure rate and a ridership level of the train.

## Description

### Technical Field

The present invention relates to a train control system, an on-board control device, and a train control method.

### Background Art

As a method for efficiently operating a train, a train group management system has been contemplated to be introduced, and this system gives an operation target, such as a target time of arrival at a next station, to the train to causes the train to travel in accordance with the given target. This system is referred to as an automatic train operation (ATO) system.

The ATO system is a system that makes speed control so that a specific train reaches an operation target in a case where a determination is made that the train delays from scheduled traveling on a timetable. At that time, when targets (time, position, and speed) as to when (time), where (position), and how fast (speed) to arrive are given to a train from the operation management system, the train given the targets recreates a set target run curve so as to reach the operation targets.

As a background art of the present invention, the following PTL 1 through PTL 3 are known. PTL 1 discloses a technique with which operation information and failure information are collected from a terminal device installed in each car, and an actual traveling pattern is calculated and is displayed on a display, so that an operator can operate in response to a control command displayed on the display. In addition, PTL 2 discloses a technique with which, in a case where a normal curve and a recovery curve are set within a range not exceeding a speed limit and a train speed follows the normal curve, when the train decelerates at a vicinity of an abnormality occurrence point for some reason and the train speed deviates from the normal curve in a deceleration direction, the operation curve can be changed to the recovery curve based on speed difference information. Furthermore, PTL 3 discloses a technique with which in a case where a plurality of operation patterns is present and there is a delay sign, an operation pattern that is less likely to cause a delay can be selected, and a delay control operation pattern is for decreasing the speed at the time of entering a station instead of increasing a maximum speed.

### Citation List

### Patent Literature

PTL 1: JP H5-238392 A
PTL 2: JP 2013-165643 A
PTL 3: JP 2020-142745 A

### Summary of Invention

### Technical Problem

In the method described in PTL 1, a target traveling pattern after speed limitation can be calculated when the speed limitation is applied due to occurrence of abnormality, but in the traveling pattern during the abnormality caused by a factor such as a failure of a power unit, an increase in the operation time with respect to the decrease in acceleration needs to be offset by at least making the speed higher than in the traveling pattern in the normal case or by extending a power running section. However, PTL 1 describes only the operation method under the speed limitation during the abnormal time when the speed is lower than during the normal time, and traveling cannot be performed in the same operation time during the abnormal time and during the normal time. In addition, the methods described in PTL 2 and PTL 3 do not assume a situation where some of the plurality of power units have failed, and do not provide a traveling pattern for traveling in the same operation time in the normal case and at a time when the power unit fails, and therefore the occurrence of a delay cannot be prevented when the power unit fails.

In view of the above problems, an object of the present invention is to implement a train control system capable of avoiding an abnormality or an increase in a mental burden on a crew and preventing or reducing a delay when the crew whose operation frequency decreases due to automatic operation for the purpose of stable transportation performs an operation during an abnormal time even under a situation where acceleration performance is deteriorated due to a failure of the power unit or the like.

### Solution to Problem

In order to solve the above problems, one aspect of the present invention provides a train control system including an on-board control device that is mounted on a train moving on a track and controls the train, and a ground control device that is disposed on a ground and controls the train together with the on-board control device, the on-board control device and the ground control device capable of being cooperated by mutual communication, wherein the on-board control device includes a position acquisition unit that acquires an on-track position of the train, and an on-board control unit that transmits the on-track position of the train acquired by the position acquisition unit to the ground control device, receives, based on the on-track position, a travelable route of the train and a traveling permission position indicating a position where the train is able to travel in a range of the travelable route from the ground control device, and controls the train based on an operation pattern indicating a control pattern of the train for the traveling permission position, wherein the ground control device includes a ground control unit that receives the on-track position from the on-board control device, calculates the travelable route and the traveling permission position based on the on-track position, and transmits the traveling permission position to the on-board control device, and wherein the on-board control unit monitors a state of power units mounted on the train, calculates a failure rate that is a ratio of a power unit in a failed state among the power units, and controls the train based on the operation pattern selected based on the failure rate or based on the failure rate and a ridership level of the train.

### Advantageous Effects of Invention

According to the present invention, for example, in a situation where acceleration performance of a train deteriorates, an abnormality or an increase in a mental burden on a crew can be avoided, a delay can be prevented or controlled.

### Brief Description of Drawings

[FIG. 1] FIG. 1 is a diagram illustrating a train control system according to an embodiment.
[FIG. 2] FIG. 2 is a diagram illustrating a relationship, at a time when a train stops at a station, among the train, a travelable route, a traveling permission position, an operation pattern during a time when a power unit is healthy, and an operation pattern during a time when the power unit fails.
[FIG. 3] FIG. 3 is a diagram illustrating transmission and reception of information between a plurality of trains including a train that transmits failure information and a ground control device.
[FIG. 4] FIG. 4 is a flowchart illustrating one example of an automatic operation processing procedure of an on-board control device.
[FIG. 5] FIG. 5 is a flowchart illustrating one example of a processing procedure of information transmission from the ground control device to the on-board control device at a time of reception of occurrence information about a failure of the power unit.
[FIG. 6] FIG. 6 is a flowchart illustrating one example of a processing procedure of information transmission from the ground control device to the on-board control device on a train that has transmitted the occurrence information about the failure of the power unit.
[FIG. 7] FIG. 7 is a flowchart illustrating one example of a processing procedure of information transmission from the ground control device to the on-board control device on a train that is traveling ahead of the train that has transmitted the occurrence information about the failure of the power unit.
[FIG. 8] FIG. 8 is a flowchart illustrating one example of a processing procedure of information transmission from the ground control device to the on-board control device on a train following the train that has transmitted the occurrence information about the power unit travels.
[FIG. 9] FIG. 9 is a flowchart illustrating one example of a processing procedure of information transmission from the ground control device to the on-board control device on a train that is traveling on a track section connected with a track section where the train that has transmitted the occurrence information about the failure of the power unit travels.

### Description of Embodiments

Hereinafter, an embodiment of the present disclosure will be described with reference to the drawings. The present disclosure is not limited by the embodiment. Further, a power unit illustrated in the drawings is not limited to a controller that issuing s a power running command, and includes apparatuses, which supply electric power, such as a pantograph, a main conversion device, and a storage battery, and functional apparatuses acts such as an internal combustion engine, a transmission, and a motor. In the present invention, described acceleration indicates a value with respect to a torque generated by the power unit, and does not include train resistance such as gradient, curve, and running resistance. Note that in the drawings, the same portions are denoted by the same reference numerals.

Further, positions, sizes, shapes, ranges, and the like of the respective components illustrated in the drawings are for facilitating understanding of the invention, and may not represent actual positions, sizes, shapes, ranges, and the like. Therefore, the present invention is not necessarily limited to the positions, sizes, shapes, ranges, and the like disclosed in the drawings.

In the following description, the same components are distinguished by adding branch numbers to the reference numerals. Conversely, in a case where the components of the reference signs with the branch numbers are not distinguished, they are collectively referred to by the reference signs excluding the branch numbers.

### [Embodiment]

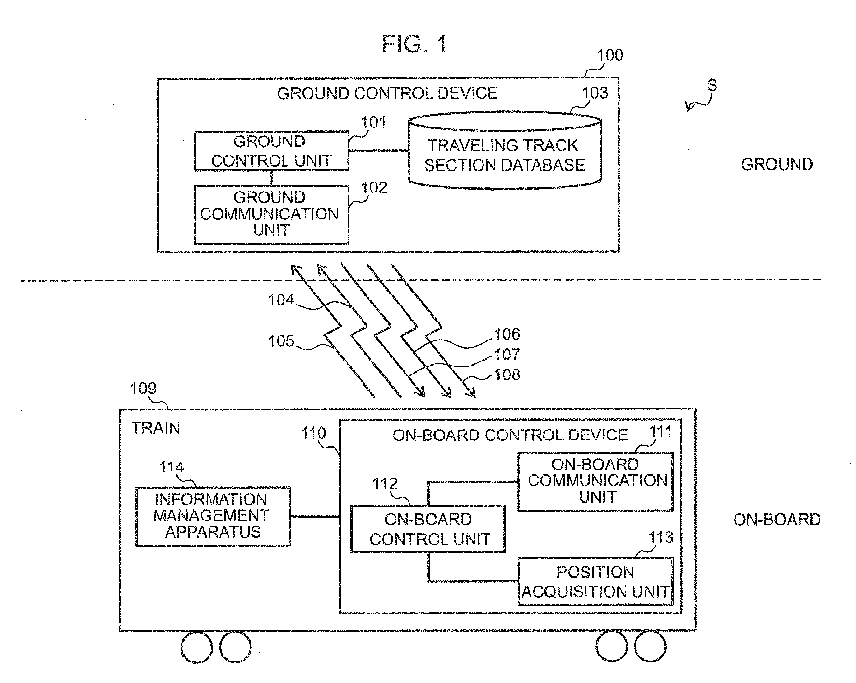

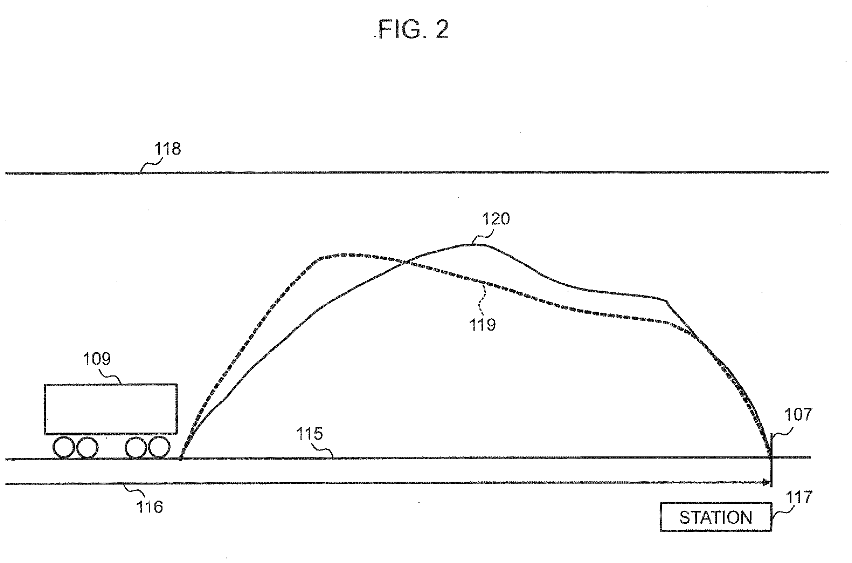

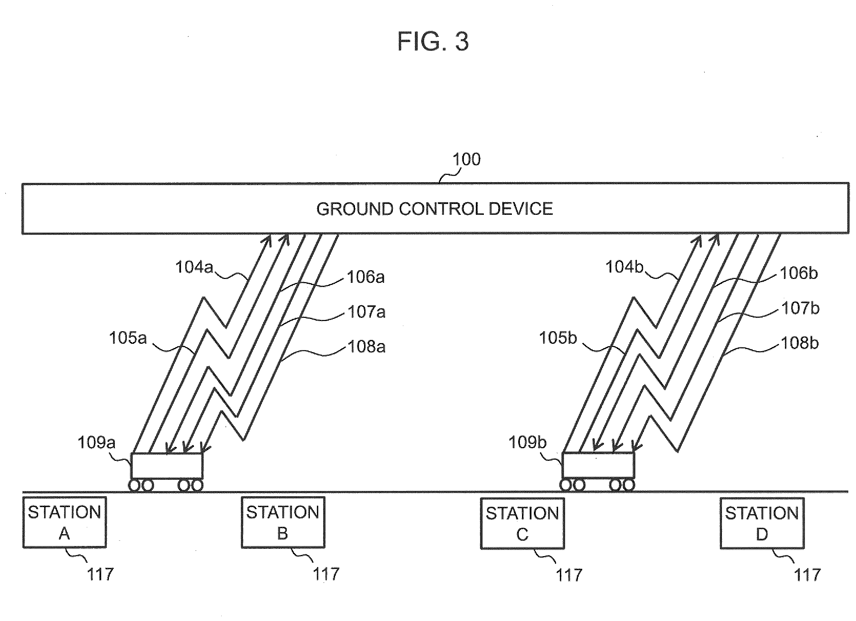

FIG. 1 is a diagram illustrating a train control system S according to an embodiment. Further, FIG. 2 is a diagram illustrating a relationship, at a time of stoppage at a station 117, among a train 109, a travelable route 116, a traveling permission position 107, an operation pattern 119 during a time when a power unit is healthy, and an operation pattern 120 during a time when the power unit fails. Further, FIG. 3 is a diagram illustrating transmission and reception of information between the plurality of trains 109 including the train 109 that transmits failure information and a ground control device 100.

The train control system S includes the ground control device 100 and an on-board control device 110 mounted on the train 109 traveling on a track 115.

The ground control device 100 includes a ground control unit 101, a ground communication unit 102, and a traveling track section database 103. The ground control unit 101 calculates the traveling permission position 107 indicating a travelable position in the range of the travelable route 116 of the train 109, designates the station 117 at which the train 109 stops, and calculates an operation pattern 106 for traveling from the station 117 to an arrival station 108.

The ground communication unit 102 transmits information calculated by the ground control unit 101 to the on-board control device 110. The traveling track section database 103 is a database for managing an on-track position 104 of the train 109.

The on-board control device 110 includes an on-board communication unit 111, an on-board control unit 112, and a position acquisition unit 113. The on-board communication unit 111 communicates with the ground control device 100. The on-board control unit 112 controls the operation of the train 109 at a speed lower than 0 km/h at a speed limit 118 and at the traveling permission position 107 based on the arrival station 108 at which the train arrives, the traveling permission position 107, and the operation pattern 106. The position acquisition unit 113 acquires the on-track position of the train 109.

In addition, the train 109 includes an information management apparatus 114 that is connected with various apparatuses mounted on cars, transmits and receives commands, and displays and records failures of the apparatuses.

When a failure occurs in the power unit of the train 109, the on-board control device 110 receives failure information about the power unit from the information management apparatus 114. The on-board control device 110 calculates a failure rate which is a ratio of the power unit in a failed state among all the power units of the train 109, and transmits failure information 105 about the power unit to the ground control device 100. The ground control device 100 searches for the operation pattern (target run curve) 119 and the travelable operation time of the train 109 based on the relationship between the failure rate of the power unit and a reduction rate of acceleration defined in the database in advance. Thereafter, the on-board control device 110 operates the train 109 in accordance with the operation pattern 119 and the like received from the ground control device 100. Note that in a case where the ground control device 100 determines that the train 109 cannot travel, based on the failure information 105 about the power unit, the ground control device 100 transmits a stop command to the on-board control device 110. The on-board control device 110 performs brake output in response to the stop command to stop the train 109.

Upon receiving the failure information 105 about the power unit from the on-board control device 110, the ground control device 100 recognizes each on-track position, arrival station 108, traveling permission position 107, and operation pattern 106 of the train 109 (failed train) that has transmitted the occurrence information about a failure of the power unit, the train 109 (preceding train) preceding the train 109 that has transmitted the occurrence information about the failure of the power unit, the train 109 (following train) that follows the train 109 that has transmitted the occurrence information about the failure of the power unit, and the train 109 (connection train) that travels on a track section connected for a transfer or the like with a track section where the train 109 that has transmitted the occurrence information about the failure of the power unit travels.

Thereafter, the ground control device 100 operates the train 109 (failed train) in which the power unit has failed to allow the train 109 to travel to a nearest station, a station adjacent to a rail yard, or the like at the same operation time as in a normal case or for suppressing a delay as much as possible. Then, the ground control device 100 transmits the updated operation pattern 106, arrival station 108, and traveling permission position 107 to the on-board control device 110 of the failed train in order to cancel the operation on the section where the train is originally scheduled to travel.

As a result, in the train 109 (failed train) in which the power unit has failed, the operation pattern 119 (FIG. 2) for the traveling permission position 107 at the healthy time is changed to the operation pattern 120 (FIG. 2) for the traveling permission position 107 at the failed time of the power unit. On the other hand, as for the trains 109 other than the train 109 (failed train) in which the power unit has failed, the ground control device 100 transmits the updated arrival station 108, traveling permission position 107, and operation pattern 106 to the on-board control device 110 in order to cope with passenger relief at the arrival station 108 at which the train 109 (failed train) in which the power unit has failed is originally scheduled to stop, time interval adjustment for leveling operation intervals, and connection of transfer.

In the control of each train 109 described below, the arrival station 108 and the traveling permission position 107 are simultaneously updated, but in a case where traveling to the updated arrival station 108 is possible such as a state where the operation interval with the preceding train is long, only the arrival station 108 may be updated, and the traveling permission position 107 may not be updated.

First, the operation of the train 109 (failed train) that has transmitted the failure information about the power unit will be described.

Upon receiving the failure information 105 about the power unit from the on-board control device 110, the ground control device 100 recognizes the on-track position of the train 109 (failed train) that has transmitted the failure information 105 about the power unit. Then, using data registered in advance in the ground control device 100, the ground control device 100 determines whether the train 109 (failed train) can travel, based on a failure rate which is a ratio of the power unit in a failed state among all the power units of the train 109 (failed train).

If the train 109 (failed train) cannot travel after occurrence of the failure of the power unit, the ground control device 100 instructs the on-board control device 110 to stop the train 109 (failed train).

If the train 109 (failed train) can travel, the ground control device 100 determines whether traveling between stations can be performed at the same operation time as in the normal case by changing the operation pattern 106. In a case where the train 109 (failed train) can travel between stations at the same operation time as in the normal case by changing the operation pattern 106 even after a power unit fails, the ground control device 100 transmits only the changed operation pattern 106 to the on-board control device 110 of the train 109 (failed train), and does not change the arrival station 108 and the traveling permission position 107. Note that, the operation pattern 106 to be selected here is an operation pattern in which the speed is set high enough to cover a delay time due to an acceleration decreased due to the failure rate of the power unit.

Although traveling between stations cannot be performed at the same operation time as in the normal case by changing the operation pattern 106 after the power unit fails, in a case where the delay time can be controlled depending on the acceleration decreased due to the failure of the power unit, only the changed operation pattern 106 is transmitted to the on-board control device 110 of the train 109 (failed train). However, if the train 109 (failed train) in which the power unit has failed continues to travel, each of the other trains 109 traveling on the track section where the train 109 (failed train) in which the power unit has failed travels will be delayed. Therefore, the train 109 (failed train) is caused to travel to the nearest station where deadheading to an evacuation place such as a rail yard or a detention line is possible, and then the updated arrival station 108 and traveling permission position 107 are transmitted to the on-board control device 110 of the train 109 (failed train). Note that, as the operation pattern 106 to be selected here is an operation pattern in which the speed is set as high as possible to control the delay time due to the acceleration decreased due to the failure of the power unit within a certain range (for example, to the maximum).

On the other hand, when the delay cannot be controlled even by changing the operation pattern 106, the operation pattern 106 is not changed. Note that, if the train 109 (failed train) in which the power unit has failed continues to travel, each of the other trains 109 traveling on the track section where the train 109 (failed train) in which the power unit has failed travels will be delayed. Therefore, the train 109 (failed train) is caused to travel to the nearest station capable where deadheading to an evacuation place such as a rail yard or a detention line is possible, and then the updated arrival station 108 and traveling permission position 107 are transmitted to the on-board control device 110 of the train 109 (failed train).

The ground control device 100 may make an inhibition arrangement for the purpose of repair after the train 109 (failed train) in which the power unit has failed stops at the arrival station 108. In addition, the ground control device 100 may transmit, to the on-board control device 110, new traveling permission position 107, arrival station 108, and operation pattern 106 for causing the train to travel to the rail yard. Further, the ground control device 100 may make an inhibition arrangement for the purpose of repair in a case where a failure occurs in the power unit of the train 109 during the stoppage at a station.

Next, the operation of the train 109 (preceding train) preceding the train 109 (failed train) in which the power unit has failed will be described. In this case, in FIG. 3, the train in which the power unit has failed is referred to as a train 109a, and the preceding train of the train 109a is referred to as a train 109b.

The ground control device 100 recognizes an on-track position 104b, an arrival station 108b, a traveling permission position 107b, and an operation pattern 106b of the train 109b preceding the train 109a. Then, the ground control device 100 checks whether the following train 109a has stopped at the arrival station 108a where the train originally stops due to the operation cancellation or deadheading. In a case where the train 109a stops at the arrival station 108a or in a case where the train 109a does not stop at the arrival station 108a but a train (not illustrated) traveling between the train 109b and the train 109a stops at the arrival station 108a, the ground control device 100 does not update the arrival station 108b and the traveling permission position 107b of the train 109b. At that time, the ground control device 100 checks whether the operation interval between the train 109b and the following train (not illustrated) is as scheduled, and transmits the changed operation pattern 106b to the on-board control device 110 of the train 109b in a case where adjustment of the operation interval (adjustment of the operation time) is necessary.

On the other hand, in a case where the train 109a in which the power unit has failed does not stop at the arrival station 108a where the train originally stops, or in a case where the train 109a does not stop at the arrival station 108a and a train (not illustrated) traveling between the train 109b and the train 109a also does not stop at the arrival station 108a, the ground control device 100 transmits the updated arrival station 108b and traveling permission position 107b of the train 109b to the on-board control device 110 of the train 109b. However, since the train 109b additionally stops at a station and is thus delayed from the operation schedule, the changed operation pattern 106b is transmitted to the on-board control device 110 of the train 109b for the purpose of maximally controlling the delay.

As a method for changing the operation pattern 106b in order to adjust the operation interval between the train 109b and the train 109 (following train) following the train 109b, a check is made whether the arrival station 108, the traveling permission position 107, and the operation pattern 106 of the train 109 (following train) have been updated, and the operation pattern 106b of the train 109b is selected in accordance with the operation method of the train 109. However, even in a case where the operation interval of each train 109 is extended, if the extended operation interval can be reduced by stopping the train 109a in which the power unit has failed at the arrival station 108a and adjusting the operation of the train 109 following the train 109a, the arrival station 108b, the traveling permission position 107b, and the operation pattern 106b of the train 109b may not be updated.

Further, in the method for updating the arrival station 108b and the traveling permission position 107b, the train 109b may be stopped at a station 117 through which the train 109b should originally pass, and passengers increased at the station 117 due to a train delay, operation cancellation of the train 109a, or the like may be relieved. In addition, the train 109b may end a service operation by changing the operation and may pass through the arrival station 108b where the train should originally stop as a deadhead train. Further, after stopping at the arrival station 108b, the train 109b may not transmit the arrival station 108b and the traveling permission position 107b, but may transmit the arrival station 108b and the traveling permission position 107b for a direction opposite to the traveling direction and perform a return operation at the arrival station 108b.

As a result, the ground control device 100 can transmit an appropriate command in accordance with the operation status of the following train 109 to the train 109b preceding the train 109a in which the power unit has failed, and the time required for the convergence of the disruption of the timetable can be shortened, and the congestion relief of the station can be achieved by a flexible change in the operation.

Next, the operation of the train 109 (following train) following the train 109 (failed train) in which the power unit has failed will be described. In this case, in FIG. 3, the train 109 (failed train) in which the power unit has failed is referred to as the train 109b, and the following train with respect to the train 109b is referred to as the train 109a.

The ground control device 100 recognizes an on-track position 104a, the arrival station 108a, a traveling permission position 107a, and an operation pattern 106a of the train 109a following the train 109b in which the power unit has failed, and checks whether the train 109b has stopped at the arrival station 108b where the train should originally stop. In a case where the train 109b stops at the arrival station 108b or in a case where a following train (not illustrated) traveling between the train 109b and the train 109a stops at the arrival station 108b, the passenger relief at the arrival station 108b is unnecessary. Thus, the ground control device 100 does not update the arrival station 108a and the traveling permission position 107a of the train 109a. At that time, a check is made whether the operation interval between the train 109a and its following train (not illustrated) is as scheduled, and if adjustment of the operation interval is necessary, the changed operation pattern 106a of the train 109a is transmitted to the on-board control device 110.

On the other hand, in a case where the train 109b in which the power unit has failed does not stop at the arrival station 108b where the train originally stops, or in a case where the train 109b does not stop at the arrival station 108b and a train (not illustrated) traveling between the train 109b and the train 109a also does not stop at the arrival station 108b, the ground control device 100 transmits the updated arrival station 108a and traveling permission position 107a of the train 109a to the on-board control device 110. However, since the train 109a additionally stops at a station and is thus delayed from the operation timetable, the ground control device 100 transmits the changed operation pattern 106a to the on-board control device 110 of the train 109a for the purpose of maximally controlling the delay.

Note that as the method for changing the operation pattern 106a in order to adjust the operation interval between the train 109a and the following train (not illustrated), a check is made whether the arrival station 108, the traveling permission position 107, and the operation pattern 106 of the train 109 preceding the train 109a have been updated, and the operation pattern 106 of the train 109a is selected in accordance with the operation method of the preceding train 109. However, even in a case where the operation interval of each train 109 is expanded, if the expanded operation interval can be reduced by halting the train 109b in which the power unit has failed at the station and adjusting the operation of the train 109 preceding the train 109b in which the power unit has failed, the arrival station 108, the traveling permission position 107, and the operation pattern 106 of the train 109 following the train 109b may not be updated.

Note that as for the train 109a following the train 109b in which the power unit has failed, the arrival station 108a, the traveling permission position 107a, and the operation pattern 106a may be updated depending on the expected operation status, or the service operation may be terminated by changing the operation, and the train 109a as a deadhead train may pass through the arrival station 108a where the train should originally stop. In addition, the train 109a may not transmit the arrival station 108a and the traveling permission position 107a before the change after stopping at the arrival station 108a, but may transmit the arrival station 108a and the traveling permission position 107a for a direction opposite to the traveling direction and perform a return operation at the arrival station 108a.

Further, if the extension of the operation interval of each train 109 can be prevented by halting the train 109b in which the power unit has failed after stoppage at the arrival station 108b, the arrival station 108a, the traveling permission position 107a, and the operation pattern 106a of the train 109a following the train 109b may not be updated.

As a result, the ground control device 100 can transmit an appropriate command in accordance with the operation status of the preceding train to the train 109a following the train 109b in which the power unit has failed, and the time required for the convergence of the disruption of the timetable can be shortened, and the congestion relief of the station can be achieved by a flexible change in the operation.

Next, the operation of the train 109 (connection train) traveling on a track section (connected track section) connected with the track section where the train 109 (failed train) in which the power unit has failed travels will be described.

The ground control device 100 recognizes the on-track position 104, the arrival station 108, the traveling permission position 107, the operation pattern 106, and a connection schedule for transfer and the like of the trains 109 (connection trains) traveling on the track section where the train 109 (failed train) in which the power unit has failed travels and the connected track section. In a case where the train 109 (failed train) is scheduled to be connected, a check is made whether the train 109 (connection train) to be connected or the train 109 whose operation is the same as of the train 109 (connection train) to be connected can be connected, and in a case where the connection is possible, a check is made whether the operation pattern 106 can be changed. In a case where congestion of the station 117 occurs unless the operation pattern of the train 109 (connection train) to be connected is changed due to the influence of the delay caused by the failure of the power unit, the changed operation pattern 106 of the train 109 (connection train) to be connected is transmitted to the on-board control device 110 of the train 109 (connection train). Note that, in a case where a delay has occurred in the train 109 (connection train) to be connected and the connection time is shortened when the application of the current operation pattern 106 is continued, the changed operation pattern 106 may be transmitted to the on-board control device 110 of the train 109 (connection train) to be connected in order to secure the connection time.

On the other hand, in a case where the train 109 to be connected (connection train) or the train 109 whose operation is the same as of the train 109 (connection train) to be connected cannot be connected, the operation pattern 106 is not changed.

In a case where the train 109 (connection train) to be connected is not preset, a determination is made whether the operation pattern 106 of the train 109 on the connected track section is changed, only depending on the operation status of the connected track section. In addition, in a case where connection with the train 109 (connection train) to be connected cannot be established even if the operation pattern 106 is changed, the operation pattern 106 may be changed in order to establish the connection with the train 109 not to be connected. As a result, connection to another track section can be performed to the maximum, so that confusion caused by transfer or the like can be reduced.

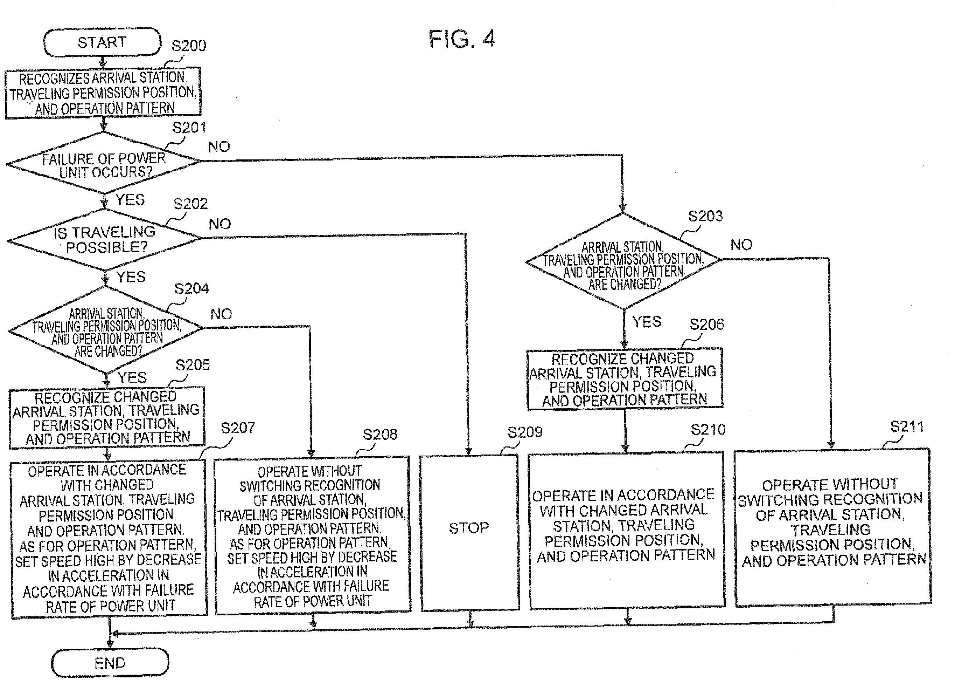

FIG. 4 is a flowchart illustrating one example of an automatic operation processing procedure of the on-board control device 110.

First, in step S200, the on-board control device 110 recognizes current arrival station, traveling permission position, and operation pattern of the train 109. Next, in step S201, the on-board control device 110 determines whether the power unit has failed. In a case where the power unit has failed (YES in step S201), step S202 is executed, and in a case where the power unit has not been failed (NO in step S201), step S203 is executed.

Next, in step S202, the on-board control device 110 determines whether the train 109 can travel (for example, whether the train can ascend a gradient in a traveling section). The on-board control device 110 executes step S204 when the traveling is possible (YES in step S202), or executes step S209 when the traveling is not possible (NO in step S202).

In step S203, in a case where no failure occurs in the power unit, the on-board control device 110 determines whether the arrival station, the traveling permission position, and the operation pattern have been changed. The on-board control device 110 executes step S206 when the arrival station, the traveling permission position, and the operation pattern have been changed (YES in step S203), or executes step S211 when the arrival station, the traveling permission position, and the operation pattern have not been changed (NO in step S206).

In step S204, in a case where the power unit has failed, the on-board control device 110 determines whether the arrival station, the traveling permission position, and the operation pattern have been changed. The on-board control device 110 executes step S205 when the arrival station, the traveling permission position, and the operation pattern have been changed (YES in step S204), or executes step S208 when the arrival station, the traveling permission position, and the operation pattern have not been changed (NO in step S204).

In step S205, the on-board control device 110 recognizes the operation pattern selected in accordance with the changed arrival station and traveling permission position, and a failure rate of the power unit. Thereafter, in step S207, the on-board control device 110 operates the train 109 in accordance with the operation pattern selected in accordance with the changed arrival station and traveling permission position, and the failure rate of the power unit. Note that in the operation pattern, the speed is set as high as possible to recover -the delay caused by the acceleration decrease in accordance with the failure rate of the power unit. After executing step S207, the on-board control device 110 ends the automatic driving processing.

In step S208, the on-board control device 110 operates the train 109 without switching from the arrival station, the traveling permission position, and the operation pattern before the change. Note that in the operation pattern, the speed is set as high as possible to recover the delay caused by the acceleration decrease in accordance with the failure rate of the power unit. After executing step S208, the on-board control device 110 ends the automatic operation processing.

In step S209, the on-board control device 110 determines that the train 109 cannot travel and stops the train. After executing step S209, the on-board control device 110 ends the automatic operation processing.

In step S206, the on-board control device 110 recognizes the updated arrival station, traveling permission position, and operation pattern for the purpose of passenger relief and time interval adjustment. In subsequent step S210, the on-board control device 110 operates the train 109 in accordance with the recognized arrival station, traveling permission position, and operation pattern that have been changed. After step S210 is executed, the automatic operation processing ends.

In step S211, the on-board control device 110 operates the train 109 without changing the arrival station, the traveling permission position, and the operation pattern before the change. After executing step S211, the on-board control device 110 ends the automatic operation processing.

By changing the arrival station, the traveling permission position, and the operation pattern using the above automatic operation processing, the automatic operation can be performed even when the power unit has failed, except for a case where traveling is impossible. In addition, an influence over transportation can be reduced by updating the operation method of the train preceding or following the train in which the power unit has failed. Further, in a case where traveling is impossible due to the failure, the traveling safety of the train can be secured by an emergency stop.

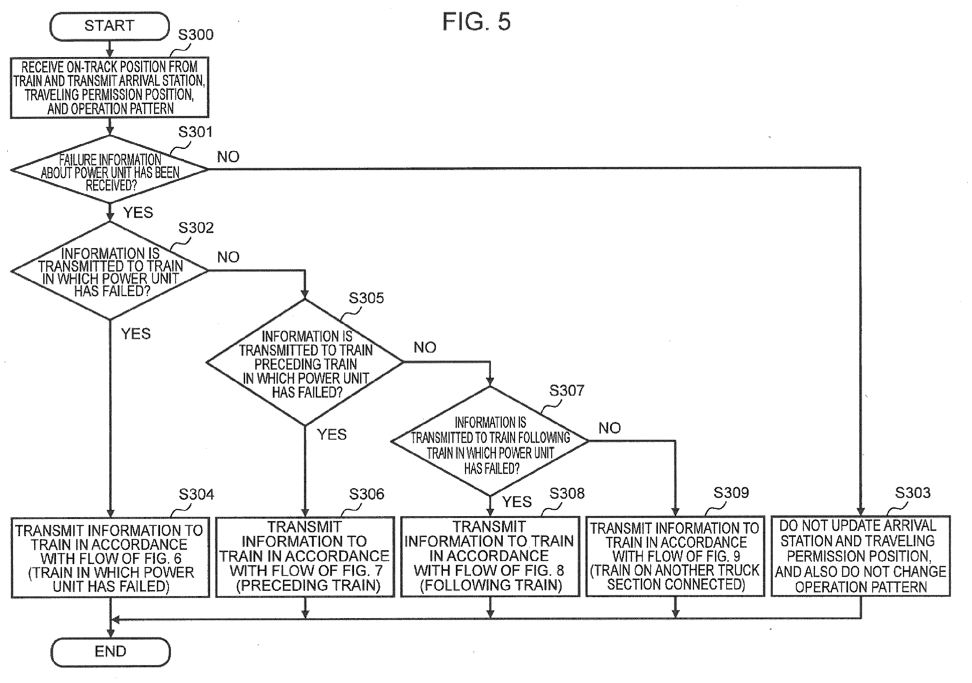

FIG. 5 is a flowchart illustrating one example of a processing procedure of information transmission from the ground control device 100 to the on-board control device 110 at a time when occurrence information about a failure of the power unit is received.

In step S300, the ground control device 100 recognizes the on-track position received from the train 109, and transmits the arrival station, the traveling permission position, and the operation pattern to the train 109.

Next, in step S301, the ground control device 100 determines whether the failure information about the power unit has been received from the train 109. The ground control device 100 executes step S302 when receiving the failure information about the power unit is received (YES in step S301), or executes step S303 when not receiving the failure information about the power unit (NO in step S301).

In step S302, the ground control device 100 determines whether a transmission destination of the information from the ground control device 100 is the train 109 that has transmitted the failure information about the power unit. The ground control device executes step S304 when the transmission destination of the information is the train 109 that has transmitted the failure information about the power unit (YES in S302), or executes step S305 when the transmission destination of the information is not the train 109 that has transmitted the failure information about the power unit (NO in step S302).

In step S303, since the failure information about the power unit has not been received, the ground control device 100 maintains the current arrival station, traveling permission position, and operation pattern without changing the arrival station, the traveling permission position, and the operation pattern based on the failure information about the power unit. After executing step S303, the ground control device 100 ends the transmission processing.

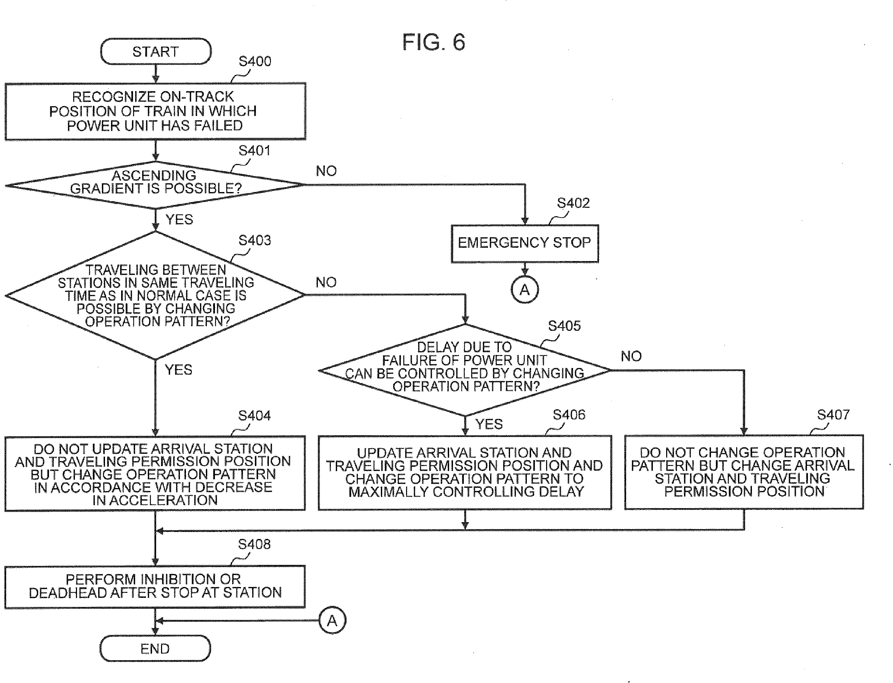

In step S304, the ground control device 100 transmits information to the on-board control device 110 of the train 109 that has transmitted the failure information about the power unit in accordance with the processing flow of FIG. 6 to be described later. After executing step S304, the ground control device 100 ends the transmission processing.

In step S305, the ground control device 100 determines whether a transmission destination of the information from the ground control devices 100 is a preceding train preceding the train 109 that has transmitted the failure information about the power unit. The ground control device 100 executes step S306 when the transmission destination of the information is the preceding train of the train 109 that has transmitted the failure information about the power unit (YES in step S305), or executes step S307 when the transmission destination is other than the preceding train (NO in step S305).

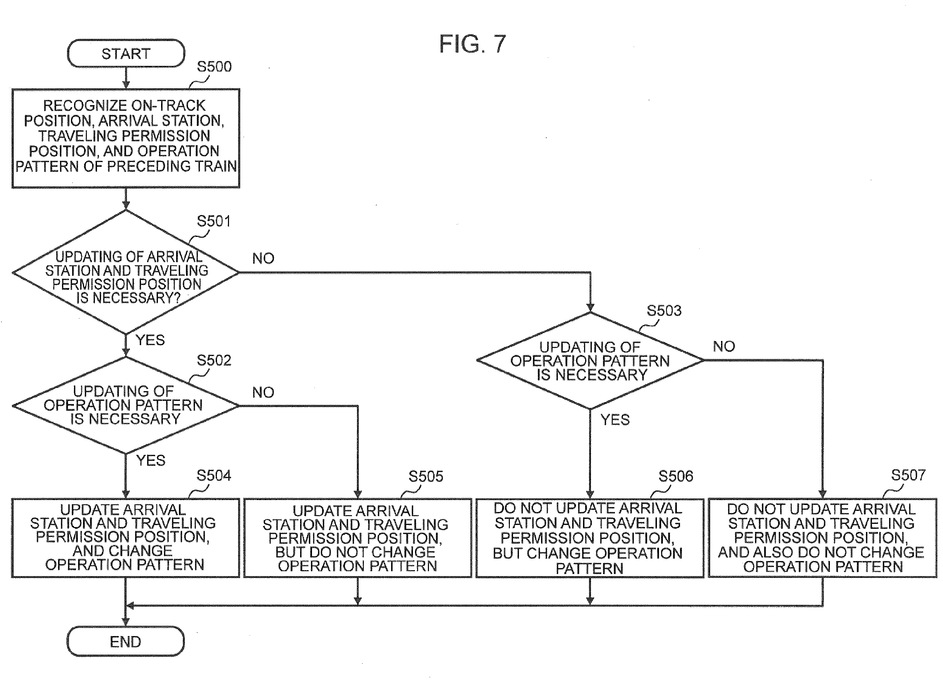

In step S306, the ground control device 100 transmits information to the on-board control device 110 of the preceding train preceding the train 109 that has transmitted the failure information about the power unit in accordance with the processing flow of FIG. 7. After step S306 is executed, the transmission processing ends.

In step S307, the ground control device 100 determines whether a transmission destination of the information from the ground control devices 100 is a following train following the train 109 that has transmitted the failure information about the power unit. The ground control device 100 executes step S308 when the transmission destination of the information is the following train of the train 109 that has transmitted the failure information about the power unit (YES in step S307), or executes step S309 when the transmission destination is other than the following train (NO in step S307).

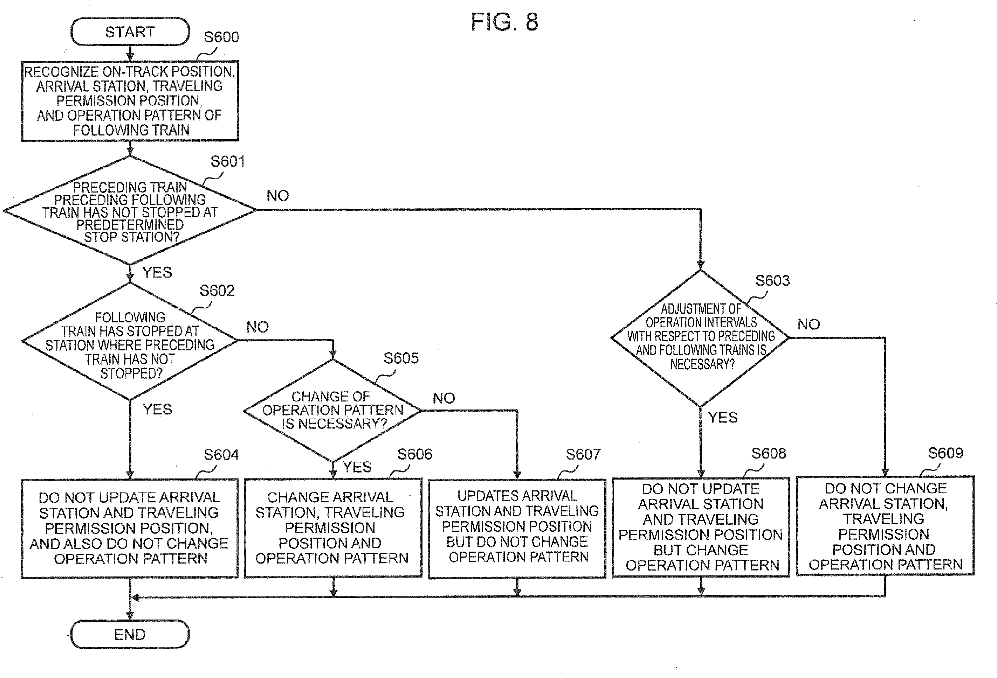

In step S308, the ground control device 100 transmits information to the on-board control device 110 of the following train of the train 109 that has transmitted the failure information about the power unit in accordance with the processing flow of FIG. 8. After executing step S308, the ground control device 100 ends the transmission processing.

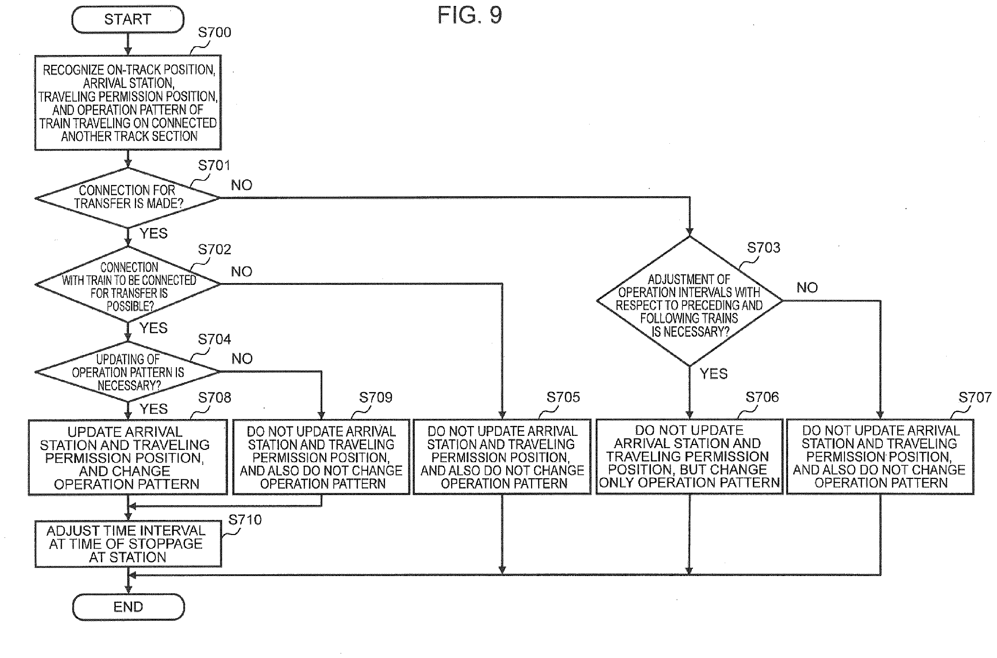

In step S309, the ground control device 100 transmits information to the on-board control device 110 of the train 109 traveling on a track section connected for transfer with the track section where the train 109 that has transmitted the failure information about the power unit travels, in accordance with the processing flow of FIG. 9. After executing step S309, the ground control device 100 ends the transmission processing.

The ground control device 100 transmits information to the on-board control device 110 of each train 109 using the above processing, and thus can issue a command to each train 109, in particular, mainly to the train 109 that has transmitted the failure information about the power unit.

FIG. 6 is a flowchart illustrating one example of an information transmission processing procedure of the ground control device 100 with respect to the on-board control device 110 in the train 109 that has transmitted the occurrence information about the failure of the power unit.

In step S400, the ground control device 100 recognizes the on-track position of the train 109 that has transmitted the failure information about the power unit. Next, in step S401, the ground control device 100 determines whether the train 109 can ascend a gradient in the traveling section, based on the failure rate of the power unit. The ground control device 100 executes step S403 when ascending the gradient in the traveling section can be performed (YES in step S401), or executes step S402 when ascending the gradient in the traveling section cannot be performed (NO in step S401). In step S402, the ground control device 100 urgently stops the train 109.

In step S403, the ground control device 100 determines whether traveling between stations is possible in the same operation time as in the normal case by changing the operation pattern of the train 109 that has transmitted the failure information about the power unit, and executes step S404 when possible (YES in step S403), or executes step S405 when impossible (NO in step S403).

In step S404, the ground control device 100 changes the operation pattern to an operation pattern enabling the delay caused by the decrease in acceleration to be recovered, and does not update the arrival station and the traveling permission position, as the information to be transmitted from the ground control device 100 to the train 109. After executing step S404, the ground control device 100 executes step S407.

In step S405, the ground control device 100 determines whether a delay caused by the failure of the power unit can be controlled by changing the operation pattern. The ground control device 100 executes step S406 when the control is possible (YES in step S405), or executes step S407 when the control is impossible (NO in step S405).

In step S406, the ground control device 100 changes the operation pattern to an operation pattern enabling the delay to be maximally controlled, and also updates the arrival station and the traveling permission position, as the information to be transmitted from the ground control device 100 to the train 109. After executing step S406, the ground control device 100 executes step S407.

In step S407, the ground control device 100 does not change the operation pattern, but updates the arrival station and the traveling permission position, as the information to be transmitted from the ground control device 100 to the train 109. After executing step S407, the ground control device 100 executes step S408.

In step S408, after the train 109 travels to the arrival station, the ground control device 100 transmits inhibition information to the on-board control device 110, or newly transmits the arrival station, the traveling permission position, and the operation pattern toward a shed. After executing step S408, the ground control device 100 ends the transmission processing.

The ground control device 100 can issue a command to the train 109, that has transmitted the failure information about the power unit using the above transmission processing as to whether the arrival station and the traveling permission position have been updated and whether the operation pattern has been changed, so that the train 109 can be operated to a position where the train 109 can be evacuated without causing an operator to go to the train 109, and a delay in a track section where the train 109 in which the power unit has failed exists can be controlled.

FIG. 7 is a flowchart illustrating one example of the information transmission processing procedure of the ground control device 100 with respect to the on-board control device 110 of a train that travels ahead of the train that has transmitted the occurrence information about the failure of the power unit.

First, in step S500, the ground control device 100 recognizes the on-track position, the arrival station, the traveling permission position, and the operation pattern of the preceding train preceding the train 109 that has transmitted the failure information about the power unit. Next, in step S501, the ground control device 100 determines whether it is necessary to update the arrival station and the traveling permission position of the preceding train preceding the train 109 that has transmitted the failure information about the power unit. The necessity of updating the arrival station and the traveling permission position of the preceding train is determined based on any one of information indicating that the train 109 in which the power unit has failed has stopped at a station where the train 109 originally stops, and information indicating that the train 109 in which the power unit has failed has not stopped at the station where the train originally stops and also a train traveling between the preceding train and the train 109 in which the power unit has failed has not stopped at the station where the train 109 originally stops. The ground control device 100 executes step S502 when the updating of the arrival station and the traveling permission position is necessary (YES in step S501), or executes step S503 when the updating of the arrival station and the traveling permission position is unnecessary (NO in step S501).

In step S502, the ground control device 100 determines whether it is necessary to update the operation pattern of the preceding train preceding the train 109 that has transmitted the failure information about the power unit. This is because a delay from the operation schedule might be caused by stoppage of the train 109 in which the power unit has failed at a station where the train originally stops. The ground control device 100 executes step S504 when the updating of the operation pattern is necessary (YES in step S502), or executes step S505 when the updating of the operation pattern is unnecessary (NO in step S502).

In step S503, the ground control device 100 determines whether it is necessary to update the operation pattern of the preceding train preceding the train that has transmitted the failure information about the power unit. That is, a determination is made, when the preceding train travels without updating the operation pattern, whether the preceding train can travel without extending the operation interval with the following train including the train that has transmitted the failure information about the power unit. Step S506 is executed when the updating of the operation pattern is necessary (YES in step S503), or step S507 is executed when the updating of the operation pattern is unnecessary (NO in step S503).

In step S504, the ground control device 100 updates the arrival station and the traveling permission position, and changes the operation pattern,, as the information to be transmitted from the ground control device 100 to the preceding train. After executing step S504, the ground control device 100 ends the transmission processing.

In step S505, the ground control device 100 updates the arrival station and the traveling permission position, but does not change the operation pattern, as the information to be transmitted from the ground control device 100 to the preceding train. After executing step S505, the ground control device 100 ends the transmission processing.

In step S506, the ground control device 100 change the operation pattern, but does not update the arrival station and the traveling permission position, as the information to be transmitted from the ground control device 100 to the preceding train. After executing step S506, the ground control device 100 ends the transmission processing.

In step S507, the ground control device 100 does not update the arrival station and the traveling permission position, and also does not change the operation pattern, as the information to be transmitted from the ground control device 100 to the preceding train. After executing step S507, the ground control device 100 ends the transmission processing.

The ground control device 100 issues a command to the preceding train preceding the train 109 that has transmitted the failure information about the power unit as to whether the arrival station and the traveling permission position have been updated and whether the operation pattern has been changed by using the above processing, it is possible to control an increase in the operation interval between the following train and the preceding train preceding the train that has transmitted the failure information about the power unit. Further, in a case where the train that has transmitted the failure information about the power unit cancels the operation at an arrival station before the arrival station where the train is scheduled to arrive, the preceding train stops at the arrival station where the train that has transmitted the failure information about the power unit is scheduled to stop, thereby relieving the passengers at the station where the train is scheduled to stop.

FIG. 8 is a flowchart illustrating one example of an information transmission processing procedure of the ground control device 100 with respect to the on-board control device 110 in the train 109 following the train that has transmitted the occurrence information about the power unit travels.

First, in step S600, the ground control device 100 recognizes the on-track position, the arrival station, the traveling permission position, and the operation pattern of the following train following the train that has transmitted the failure information about the power unit.

Next, in step S601, the ground control device 100 determines whether the train 109 that has transmitted the failure information about the power unit or a train that has traveled between the train 109 and the following train has stopped at the arrival station where the train 109 is originally scheduled to stop. The ground control device 100 executes step S602 when none of the trains stops at the station where the trains should originally stop (YES in step S601), and executes step S603 when any of the trains stops (NO in step S601).

In step S602, when the train 109 that has transmitted the failure information about the power unit has passed through the arrival station where the train should originally stop or has stopped traveling midway by cancellation, the ground control device 100 determines whether any of the following trains following the train that has transmitted the failure information about the power unit has stopped at the station where the train 109 should originally stop. The ground control device 100 executes step S604 when any of the following trains stops at the station where the train 109 that has transmitted the failure information about the power unit should originally stop (YES in step S602), or executes step S605 when none of the following trains has stopped (NO in step S602).

In step S603, the ground control device 100 determines whether operation intervals between the following train following the train 109 that has transmitted the failure information about the power unit and trains traveling ahead of and behind the train 109 deviate from the timetable and adjustment of the operation intervals is necessary. The ground control device 100 executes step S608 when the operation intervals deviate from the timetable (YES in step S603), or executes step S609 when the operation intervals are in accordance with the settings of the timetable (NO in step S603).

In step S604, since the relief of the passengers at the arrival station where the train should originally stop has been completed, the ground control device 100 does not update the arrival station and the traveling permission position and also does not change the operation pattern, as the information to be transmitted from the ground control device 100 to the following train. After executing step S604, the ground control device 100 ends the transmission processing.

In step S605, the ground control device 100 determines whether change of the operation pattern of the following train is necessary due to a delay caused when the following train following the train 109 that has transmitted the failure information about the power unit stops at the station where the train 109 that has transmitted the failure information about the power unit should originally stop. The ground control device 100 executes step S606 when change of the operation pattern is necessary (YES in step S605), or executes step S607 when updating of the operation pattern is unnecessary (NO in step S605).

In step S606, since the delay occurs due to stoppage at the station where the train 109 that has transmitted the failure information about the power unit should originally stop, the ground control device 100 updates the arrival station and the traveling permission position and also changes the operation pattern, as for the information to be transmitted from the ground control device 100 to the following train. After executing step S606, the ground control device 100 ends the transmission processing.

In step S607, since the delay does not occur although the stoppage is made at the station where the train 109 that has transmitted the failure information about the power unit should originally stop, the ground control device 100 updates the arrival station and the traveling permission position but does not change the operation pattern, as for the information to be transmitted from the ground control device 100 to the following train. After executing step S607, the ground control device 100 ends the transmission processing.

In step S608, since the operation intervals with respect to preceding and following trains need to be adjusted although stoppage at the station where the train 109 that has transmitted the failure information about the power unit should originally stop is not necessary, the ground control device 100 does not update the arrival station and the traveling permission position, but changes only the operation pattern, as for the information to be transmitted from the ground control device 100 to the following train. After executing step S608, the ground control device 100 ends the transmission processing.

In step S609, since the stoppage at the station where the train 109 that has transmitted the failure information about the power unit should originally stop is unnecessary, and the adjustment of the operation intervals with respect to preceding and following trains is also unnecessary. the ground control device 100 does not update the arrival station and the traveling permission position, and also does not change the operation pattern, as for the information to be transmitted from the ground control device 100 to the following train. After executing step S609, the ground control device 100 ends the transmission processing.

By using the above processing the ground control device 100 issues a command to the following train following the train 109 that has transmitted the failure information about the power unit, as to whether the arrival station and the traveling permission position have been updated and whether the operation pattern has been changed, so that the following train can be stopped at the station where train 109 that has transmitted the failure information about the power unit originally stops and passengers at that station can be relieved. Further, convergence of disruption of the timetable can be achieved and congestion of passengers due to regular operation intervals can be eliminated by adjusting the operation time.

FIG. 9 is a flowchart illustrating one example of an information transmission processing procedure of the ground control device 100 with respect to the on-board control device 110 of a train that travels on a track section connected with the track section where the train 109 that has transmitted the occurrence information about the failure of the power unit travels.

First, in step S700, the ground control device 100 recognizes the on-track position, the arrival station, the traveling permission position, and the operation pattern of a train (hereinafter, referred to as a "connection train") traveling on a track section connected with the track section where the train 109 (hereinafter, referred to as a "failed train") that has transmitted failure information about the power unit travels.

Next, in step S701, the ground control device 100 determines whether a connection train to be connected for transfer from the failed train exists. The ground control device 100 executes step S702 when the connection train exists (YES in step S701), or executes step S703 when no connection train exists (NO in step S701).

In step S702, the ground control device 100 determines whether connection with the connection train that travels on the track section where the failed train travels and is to be connected for transfer is possible. The ground control device 100 executes step S704 when the connection with the connection train to be connected is possible (YES in step S702), or executes step S705 when the connection with the connection train to be connected is impossible (NO in step S702).

In step S703, the ground control device 100 determines whether the operation intervals between the train traveling on the track section connected with the track section where the failed train travels and preceding and following trains deviate from the timetable and adjustment of the operation intervals with respect to the preceding and following trains is necessary. The ground control device 100 executes step S706 when the operation intervals deviate from the timetable (YES in step S703), or executes step S707 when the operation intervals are in accordance with the timetable (NO in step S703).

In step S704, the ground control device 100 determines whether change of the operation pattern of the connection train is necessary in order to connect with the failed train to be connected for transfer. The ground control device 100 executes step S708 when change of the operation pattern of the connection train is necessary (YES in step S708), or executes step S709 when the connection for transfer is possible without changing the operation pattern (NO in step S708).

In step S705, the ground control device 100 does not make the connection and does not change the operation pattern since the connection train scheduled for transfer departs from the arrival station where the connected is scheduled or the connection train scheduled for transfer delays and waits for the connection, thus causing disruption of the timetable also on the track section to be connected. After executing step S705, the ground control device 100 ends the transmission processing.

In step S706, the ground control device 100 needs to adjust the operation intervals between the connection train traveling on the track section connected with the track section where the failed train travels and preceding and following trains. Therefore, the ground control device 100 does not update the arrival station and the traveling permission position, but changes only the operation pattern, as for the information to be transmitted from the ground control device 100 to the connection train. After executing step S706, the ground control device 100 ends the transmission processing.

In step S707, the ground control device 100 does not need to adjust the operation intervals between the connection train traveling on the track section connected to the track section where the failed train travels and leading and trailing trains. Therefore, the ground control device 100 does not update the arrival station and the traveling permission position, and also does not change the operation pattern, as for the information to be transmitted from the ground control device 100 to the connection train. After executing step S707, the ground control device 100 ends the transmission processing.

In step S708, the ground control device 100 needs to change the operation time by changing the operation pattern for the connection with the connection train scheduled for transfer, and thus does not update the arrival station and the traveling permission position but changes only the operation pattern, as for the information to be transmitted from the ground control device 100 to the connection train.

In step S709, since the connection can be made with the connection train scheduled for transfer without changing the operation pattern, the ground control device 100 does not update the arrival station and the traveling permission position and also does not change the operation pattern, as for the information to be transmitted from the ground control device 100 to the connection train.

In step S710, the ground control device 100 performs time interval adjustment when the failed train stops at the arrival station for waiting for the connection with the connection train scheduled for transfer. After executing step S710, the ground control device 100 ends the transmission processing.

By using the above processing, the ground control device 100 issues a command to the train 109 traveling on the track section connected with the track section where the train 109 that has transmitted the failure information about the power unit travels, as to whether the arrival station and the traveling permission position has been updated and whether the operation pattern has been changed, so that the connection with the train to be connected can be achieved without causing disruption of the timetable.

In the above-described embodiment, the on-board control device detects the number of failures in the plurality of power units, calculates the failure rate of the power units based on the number of failures of the power units, and sets an operation pattern that enables traveling in the same operation time as the normal operation time or enables control of a delay caused by the failures of the power units. The ground control device receives the on-track position and the failure rate of the power units from the on-board control device, prevents or control, for each train including the failed train in which the power unit has failed, a delay due to the influence of the failed train, relieves passengers at each station when the operation of the failed train or the like canceled, and instructs an operation method for leveling ridership levels by maintaining an optimum operation interval to relieve the congestion at each station.

Therefore, according to the above-described embodiment, in a case where a train in which the power unit has failed is present on a track, delay convergence of a train group and an influence on passengers can be controlled while a safe operation is continued. Further, by updating a traveling permission position, an arrival station, and an operation pattern mainly for the failed train in which the power unit has failed depending on the on-track position and the operation status, the operation pattern of the failed train is changed to an operation pattern setting capable of recovering the delay of the operation time due to a decrease in an acceleration in accordance with the failure rate, a safe operation is performed, and the traveling permission position and the arrival station can be updated by determination of control and deadhead. An operation pattern of train (a preceding train and a following train of a failed train, a connection train that travels on a connected track section, or the like) other than a failed train is changed based on an operation interval, and a traveling permission position and an arrival station can be updated in a case where relief of passengers at a station is necessary. Therefore, each train can be automatically operated similarly to a case where a power unit is normal while disruption of a schedule and an influence on passenger movement are being reduced.

Some specific modifications will be described below, but in the present invention, these modifications may be further combined.

The ground control device 100 may perform control so that the on-track position of the failed train in which the power unit has failed, whether boarding and discharging of passengers in the failed train can is possible, or the delay time of the failed train is output (screen output or voice output) from an output apparatus in a station where the failed train is scheduled to stop, an output apparatus in the failed train, or an output apparatus in the operation management system. As a result, the passengers of the failed train, passengers to board on the failed train, and an operation system manager of a vehicle command center can get the situation of the failed train and take appropriate measures.

The ground control device 100 may command the on-board control device 110 of the failed train to deadhead the failed train to a rail yard in a case where the rail yard is located at a predetermined short distance (for example, within a range where the failed train can travel) when the failed train in which the power unit has failed arrives at a traveling permission position or a predetermined stop station. As a result, the failed train is deadheaded to the rail yard in accordance with the command, and can undergo repair or the like.

The ground control device 100 may perform control so that the failure rate of the failed train in which the power unit has failed, the power unit as a failed location of the train, or the operation pattern is output (screen output or voice output) from the output apparatus in the on-board control device 110 in the failed train, the output apparatus in the operation management system, or the output apparatus in the rail yard. As a result, the operator of the failed train and the operation system manager of the vehicle command center can get the situation of the failed train and take appropriate measures.

The selection and change of the operation pattern of the failed train in which the power unit has failed may be performed by the on-board control device 110 of the failed train instead of the ground control device 100. In this case, the on-board control device 110 includes a database in which a plurality of operation pattern candidates is registered in advance, and acquires the operation pattern candidates from the database, or acquires operation pattern candidates from the ground control device 100 as necessary. The on-board control device 110 selects an operation pattern from the operation pattern candidates according to step S300, step S301, step S303, and step S304 of FIG. 5 (the processing flow of FIG. 6) (the processing according to steps S302 and S305 to S309 is not executed).

The operation pattern is not limited to being selected based on the failure rate, and may be selected based on the failure rate and a ridership level acquired from the on-board control device 110. Even if the power unit fails, the train may be able to travel as it is depending on the ridership level of the train. Therefore, a tractive force (torque) in the abnormal case is calculated based on the combination of the failure rate of the power unit and the ridership level, a tractive force in the normal case, which is the power at a time when the power unit of the train does not fail, is changed to the tractive force in the abnormal case, and a corresponding operation pattern is selected based on the tractive force in the abnormal case. As a result, the operation pattern can be decided in consideration of both the failure rate and the ridership level. Note that the calculation of the tractive force in the abnormal case and the selection of the operation pattern corresponding to the tractive force in the abnormal case may be performed by the ground control device 100 or the on-board control device 110.

Each processing based on the failure rate of the power unit of the train described in the above embodiment may be performed based on the failure rate and the ridership level of the train. For example, the determination whether the traveling in step S202 of FIG. 4 is impossible, the processing for "setting a speed high by acceleration decreasing in accordance with the failure rate of power unit" in steps S207 and S208, the determination in step S401 of FIG. 6, and the like may be performed based on the failure rate of the power unit and the ridership level of the train.

The operation management system connected to the ground control device may update the traveling permission position and the arrival station based on timetable information. Further, instead of receiving the failure information about the power unit from the information management apparatus, the on-board control device may monitor whether a necessary power running torque is generated, and detect the failure of the power unit in a case where the power running torque is equal to or less than a necessary value. In addition, the failure of the power unit may be detected in a case where the acceleration during the power running at a time when the train is operated falls below a preset threshold.

Note that the present invention is not limited to the above-described embodiment, and various changes and modifications can be made by those skilled in the art within the scope of the technical idea disclosed in the present invention, and various modifications are included. The above-described embodiment has been described in detail for easy understanding of the present invention, and is not necessarily limited to that having all the described configurations. Further, the other configurations can be added to, deleted from a part of the configuration in the above-described embodiment, and a part of the configuration in the embodiment can be replaced with the other configurations.

### Reference Signs List

- 3: train control system
- 100: ground control device
- 109: train
- 110: on-board control device

## Claims

1. A train control system comprising:
an on-board control device that is mounted on a train moving on a track and controls the train; and
a ground control device that is disposed on a ground and controls the train together with the on-board control device, the on-board control device and the ground control device capable of being cooperated by mutual communication,
wherein the on-board control device includes
a position acquisition unit that acquires an on-track position of the train, and
an on-board control unit that transmits the on-track position of the train acquired by the position acquisition unit to the ground control device, receives, based on the on-track position, a travelable route of the train and a traveling permission position indicating a position where the train is travelable in a range of the travelable route from the ground control device, and controls the train based on an operation pattern indicating a control pattern of the train for the traveling permission position,
wherein the ground control device includes a ground control unit that receives the on-track position from the on-board control device, calculates the travelable route and the traveling permission position based on the on-track position, and transmits the traveling permission position to the on-board control device, and
wherein the on-board control unit monitors a state of power units mounted on the train, calculates a failure rate that is a ratio of a power unit in a failed state among the power units, and controls the train based on the operation pattern selected based on the failure rate or the failure rate and a ridership level of the train.

2. The train control system according to claim 1, wherein the on-board control unit changes power of a car of the train from a tractive force in a normal case as power at a time when no power unit fails to a tractive force in an abnormal case calculated based on the tractive force in the normal case and the failure rate or based on the failure rate and a ridership level of the train.

3. The train control system according to claim 2,
wherein an apparatus that calculates the tractive force in the abnormal case and selects the operation pattern is the ground control device, and
wherein the ground control unit selects the operation pattern from a plurality of operation pattern candidates registered in advance, based on the tractive force in the abnormal case and the failure rate or based on the failure rate and the ridership level of the train.

4. The train control system according to claim 2,
wherein an apparatus that calculates the tractive force in the abnormal case and selects the operation pattern is the on-board control device, and
wherein the on-board control unit selects ' the operation pattern from a plurality of operation pattern candidates registered in advance, based on the tractive force in the abnormal case and the failure rate or based on the failure rate and the ridership level of the train.

5. The train control system according to claim 3 or 4,
wherein the apparatus determines whether the train is travelable, based on the failure rate or the failure rate and the ridership level, and decides to perform an emergency stop of the train in a case where a determination is made that the train is not travelable, and
wherein the on-board control device performs emergency stop of the train in accordance with the decision.

6. The train control system according to any one of claims 3 to 5,
wherein the apparatus selects, as the operation pattern, a first operation pattern in which a speed of the train is set high by a decrease in acceleration of the power unit in accordance with the failure rate or in accordance with the failure rate and the ridership level so that a normal operation time during which the power unit does not fail is capable of being maintained.

7. The train control system according to claim 6,
wherein the apparatus selects, as the operation pattern, a second operation pattern in which a speed of the train is set high by a decrease in acceleration of the power unit in accordance with the failure rate or in accordance with the failure rate and the ridership level so that a delay of the train falls within a predetermined range with respect to a normal operation time in a case where the normal operation time is incapable of being maintained by the first operation pattern.

8. The train control system according to any one of claims 1 to 7, wherein the ground control device calculates the travelable route of a failed train, in which the power unit has failed, for inhibiting or deadheading after passengers on the failed train are sent to any station and the traveling permission position corresponding to the travelable route, and transmits the travelable route and the traveling permission position to the on-board control device of the failed train.

9. The train control system according to any one of claims 1 to 8, wherein the ground control device calculates the travelable route of the failed train, in which the power unit has failed, where boarding and discharging of the passengers on the failed train are not hampered at a predetermined station and the traveling permission position corresponding to the travelable route, and transmits the travelable route and the traveling permission position to the on-board control device of the train that is not the failed train.

10. The train control system according to any one of claims 1 to 9, wherein the ground control device selects the operation pattern in which an operation time of the train is adjusted, and transmits the operation pattern to the on-board control device of the train that is not the failed train in which the power unit has failed.

11. The train control system according to any one of claims 1 to 10, wherein the ground control device performs control so that an on-track position of the failed train in which the power unit has failed, whether boarding and discharging of passengers of the failed train is possible, or a delay time of the failed train is output from an output apparatus in a predetermined station, an output apparatus in the failed train, or an output apparatus in an operation management system.

12. The train control system according to any one of claims 1 to 11, wherein the ground control device commands the on-board control device of the failed train in which the power unit has failed so that the failed train is deadheaded to a rail yard in a case where the rail yard exists at a predetermined near distance when the failed train arrives at the traveling permission position or a predetermined stop station.

13. The train control system according to any one of claims 1 to 12, wherein the ground control device performs control so that the failure rate of the failed train in which the power unit has failed, a failed portion, or the operation pattern is output from an output apparatus in the on-board control device in the failed train, an output apparatus in an operation management system, or an output apparatus in a rail yard.

14. The on-board control device according to any one of claims 1 to 13.

15. A train control method executed by a train control system including an on-board control device that is mounted on a train moving on a track and controls the train and
a ground control device that is disposed on a ground and controls the train together with the on-board control device, the on-board control device and the ground control device being capable of being cooperated by mutual communication, the method comprising:
causing the on-board control device to
acquire an on-track position of the train, and
transmit the acquired on-track position of the train to the ground control device, receive a travelable route of the train and a traveling permission position indicating a position where the train is travelable in a range of the travelable route based on the on-track position from the ground control device, and control the train based on an operation pattern indicating a control pattern of the train for the traveling permission position;
causing the ground control device to
receive the on-track position from the on-board control device,
calculates the travelable route and the traveling permission position based on the on-track position, and
transmit the traveling permission position to the on-board control device; and
causing the on-board control device to
monitor a state of power units mounted on the train, and calculates a failure rate that is a ratio of a power unit in a failed state among the power units, and
control the train based on the operation pattern selected based on the failure rate or based on the failure rate and a ridership level of the train.
